# EUROPÄISCHE PATENTSCHRIFT

(11) **EP 3 664 490 B1**
(45) Veröffentlichungstag und Bekanntmachung des Hinweises auf die Patenterteilung: **09.07.2025**
(21) Anmeldenummer: 20154505.0
(22) Anmeldetag: 13.04.2017
(51) Int. Cl.: H04W 12/06, H04W 12/12

(54) **IMEI SPEICHERUNG**
IMEI STORAGE
MÉMOIRE IMEI

(30) Priorität: 19.04.2016 DE 102016004735
(43) Veröffentlichungstag der Anmeldung: 10.06.2020
(62) Teilanmeldung aus: 17719999.9
(73) Patentinhaber: Giesecke+Devrient Mobile Security Germany GmbH, 81677 München (DE)
(72) Erfinder: GÖTZE, Frank, 81379 München (DE); DIETZE, Claus, 82395 Obersöchering (DE); EICHHOLZ, Jan, 80997 München (DE)
(74) Vertreter: Ter Meer Steinmeister & Partner

(56) Entgegenhaltungen:
- EP-A1- 2 829 978
- WO-A1-2014/134829
- US-A1- 2006 236 111
- US-A1- 2007 050 622
- US-A1- 2010 180 130
- US-A1- 2012 011 345

## Beschreibung

### Gebiet der Erfindung

Die Erfindung betrifft ein Chipset für ein mobilfunkfähiges Endgerät mit einer dem Endgerät zugeordneten, im Endgerät gespeicherten Endgerät-Seriennummer IMEI, und ein Endgerät.

### Stand der Technik

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten zählen die mobilen Endgeräte wie Smartphones und Mobiltelefone und mobilfunkfähige Tablets. Zu mobilfunkfähigen Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtungen, wie z.B. Heizungen oder Stromverbraucher mit Endgeräten in Gestalt von Regelungsgeräten.

Die IMEI, ausgeschrieben International Mobile Station Equipment Identity, ist eine eindeutige 15-stellige Endgerät-Seriennummer, anhand derer jedes mobile Endgerät im GSM- oder UMTS-System und Nachfolgern weltweit eindeutig identifiziert werden kann. Dual-SIM-Handys besitzen zwei IMEI-Nummern.

Die IMEI eines Mobiltelefons kann durch die im GSM-System standardisierte Eingabe *#06# im Eingabefeld der Telefonnummer abgefragt werden. Diese Abfragemöglichkeit ist erwünscht. Gemäß GSM ist vorgesehen, dass eine IMEI eindeutig und vor Manipulation, z.B. Fälschung oder Änderung, durch den Benutzer geschützt ist. So schreibt [1] ETSI TS 122 016, Kapitel 2 "General", Seite 5 vor: *"The IMEI shall not be changed after the ME's final production process. It shall resist tampering, i.e. manipulation and change, by any means (e.g. physical, electrical and software*)*."* Die Praxis zeigt hingegen, dass bei vielen seit 2002 auf dem Markt befindlichen Mobiltelefonen eine Manipulation der IMEI möglich ist.

Zur Nutzung eines mobilfunkfähigen Endgeräts, wie Smartphone, Mobiltelefon, in einem Mobilfunknetzwerk eines Netzbetreibers enthält das Endgerät ein Teilnehmeridentitätsmodul mit einem Subskriptions-Profil oder kurz Profil. Das Profil bewerkstelligt die Konfiguration des Endgeräts und der Verbindung des Endgeräts im Mobilfunknetz. Das Profil ist durch einen strukturierten Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Endgerät selbst hat ein Chipset mit einem oder mehreren Endgeräte-Chips zum Betrieb von Funktionen des Endgeräts. Aktuelle (und ältere) Smartphones haben beispielsweise typischerweise ein Chipset, das zumindest drei Endgeräte-Chips umfasst, nämlich einen Transceiver-IC, der die physikalische Funkkommunikation durchführt, einen Baseband-Prozessor BB (oder gleichbedeutend Modem), der Funktionen zur Datenübertragung über Funkkommunikation auf Protokollebene durchführt, und einen Application-Prozessor AP, auf welchem das Betriebssystem und Anwendungssoftware, z.B. Applikationen (z.B. Apps), ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth.

Das Teilnehmeridentitätsmodul kann herkömmlicherweise in Träger unterschiedlicher Formfaktoren integriert sein, insbesondere Plug-In und Embedded Träger. Teilnehmeridentitätsmodule in Trägern vom Formfaktor Plug-In (z.B. klassische SIM-Karte) und Embedded (zum Einlöten in ein Endgerät vorgesehenes Modul) sind auf einem dedizierten, eigenen Chip oder SoC (System-on-Chip) angeordnet.

Die US 2006/0236111 A1 ([2]) betrifft ein Verfahren zur Herstellung einer elektronischen Vorrichtung, umfassend ein Chipset mit Speicher und "Special-Purpose-DSP". Dabei ist eine Kombination aus IMEI der elektronischen Vorrichtung und Kunden-ID als ein schutzfähiger Identifikator in einen OTP-Bereich eines Flash-Speichers der elektronischen Vorrichtung geschrieben, wodurch ein Lademodul, das Software in die elektronische Vorrichtung lädt, in die Lage versetzt wird, die zur Neuprogrammierung der elektronischen Vorrichtung berechtigte Einheit, z.B. den autorisierten Kunden der Vorrichtung, eindeutig zu bestimmen.

In der US 2007/0050622 A1 ([3]) werden Techniken bereitgestellt, um den Aus-tausch einer OTP Komponente zu verhindern. Die OTP-Komponente kann Teil eines drahtlosen Geräts sein. Die drahtlose Vorrichtung ist so konfiguriert, dass die Programmierung eines neuen IMEI-Codes in die OTP-Komponente nur zulässig ist, wenn sich die drahtlose Vorrichtung in einem sicheren Modus befindet. Ein Challenge-Response-Protokoll wird verwendet, um das drahtlose Gerät in diesen sicheren Modus zu versetzen.

In der US 2012/0011345 A1 ([4]) enthält eine Prozessorhardware (z.B. eUICC) einen Mikrocode-Interpreter. Wenn verschlüsselter Mikrocode in einer Nachricht eines Dienstes enthalten ist, kann der Mikrocode an den Mikrocode-Interpreter übergeben werden. Basierend auf der Entschlüsselung und Ausführung des Mikrocodes auf der Prozessorhardware kann eine erweiterte Funktionalität realisiert werden.

In der WO 2014/134829 A1 ([5]) sind Verfahren und MultiSIM-Vorrichtungen mit integrierter SIM-Funktionalität vorgesehen. Das Verfahren umfasst das Herunter-laden mindestens eines Abonnements von einem sicheren Anwendungsmanager auf ein sicheres Element mit Fernwartungsfunktionalität innerhalb einer Benutzerausrüstung. Das Verfahren umfasst auch das Bestimmen, ob eine Identität in Bezug auf das mindestens eine Abonnement zugewiesen werden soll oder nicht. Das Verfahren umfasst ferner das Informieren der Benutzereinrichtung über das mindestens eine Abonnement, das bei der Zuweisung der Identität vorhanden ist. Damit können Abonnements und ein Pool von Identitäten effizient und flexibel verwaltet und ferngesteuert werden.

In der US 2010/0180130 A1 ([6]) benötigt ein elektronisches Gerät gültige Steuer-schlüssel, um die Einstellung der Nutzungsbeschränkung zu ändern. Der Vorrichtung sind Steuerschlüssel, ein Geheimschlüssel und ein signiertes Softwareobjekt mit einer Batch-ID und einem Hash des Geheimschlüssels vorgesehen. Für jeden Steuerschlüssel erzeugt die Vorrichtung einen kryptographischen Footprint, der an die Vorrichtung und den geheimen Schlüssel gebunden ist. Ein Nachrichten-Authentifizierungscode (MAC) jeder Einstellung der Nutzungsbeschränkung wird erzeugt, der an das Gerät gebundene MAC und ein Steuerschlüssel. Um eine Nutzungsbeschränkung zu ändern, erhält das Gerät einen Steuerschlüssel, validiert ihn anhand des gespeicherten Footprints, ändert die Einstellungen der Nutzungsbeschränkung und erzeugt eine neue Einstellung für die Nutzungsbeschränkung MAC. Die Fußabdrücke der Steuerschlüssel sind an den geheimen Schlüssel gebunden, aber die Vorrichtung behält nur einen Hash des geheimen Schlüssels.

Die CN 102 083 055 A ([7]) bezieht sich auf ein IMEI-Authentifizierungsverfahren, ein IMEI-Schutz-Mobilkommunikationsendgerät und eine Initialisierungsvorrichtung davon. Das Verfahren umfasst die folgenden Schritte: Erfassen von Chiffrier-text-Authentifizierungsdaten aus einem OTP-Bereich eines FLASH des mobilen Kommunikationsendgerätes und Erfassen eines im FLASH gespeicherten Entschlüsselungsschlüssels; gemäß einem voreingestellten Algorithmus Entschlüsseln der Chiffriertext-Authentifizierungsdaten in Klartext-Authentifizierungsdaten unter Verwendung des Entschlüsselungsschlüssels, worin die Klartext-Authentifizierungsdaten mindestens eine IMEI umfassen; und Authentifizieren der Klartext-Authentifizierungsdaten und Ausgeben des Authentifizierungsergebnisses. Die IMEI kann in der OTP-Region des FLASH gespeichert sein, wodurch eine Änderung der IMEI wirksam verhindert wird; und die IMEI ist an die eindeutige Identität des mobilen Kommunikationsendgerätes gebunden, wodurch die Schutzwirkung besser verstärkt wird.

Die EP 2 829 978 A1 ([8]) beschreibt ein Verfahren zur Erkennung mobiler Endgeräte und ein mobiles Endgerät. Das Verfahren umfasst: Lesen einer ersten internationalen Mobilgeräte-Identität (IMEI), die in einem Flash gespeichert ist; Vergleichen der ersten IMEI mit einer Sicherungs-IMEI, die in einem einmalig programmierbaren Datenbereich (OTP) gespeichert ist, der nicht verändert werden darf; und Deaktivieren des mobilen Endgeräts, wenn die erste IMEI und die Sicherungs-IMEI inkonsistent sind. In der vorliegenden Erfindung wird der IMEI-Klartext direkt in der OTP-Region des mobilen Endgeräts gesichert, und der Wert der im Flash gespeicherten IMEI und der Wert der Sicherungs-IMEI werden dynamisch verglichen, um die Legitimität der IMEI des mobilen Endgeräts bequem zu erkennen, die IMEI-Nummer des mobilen Endgeräts wirksam vor willkürlichen Änderungen zu schützen und die legitimen Interessen von Benutzern und Betreibern sicherzustellen.

Ein neueres Konzept für den Formfaktor eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" oder "i" versehen und z.B. als integrated UICC, iUICC, iSIM oder iUSIM bezeichnet.

### Zusammenfassung der Erfindung

Der Erfindung liegt die Aufgabe zu Grunde, ein Chipset für ein mobilfunkfähiges Endgerät anzugeben, in dem sich die dem Endgerät zugeordnete Endgerät-Seriennummer IMEI möglichst manipulationssicher abspeichern lässt, und ein entsprechendes Endgerät.

Die Aufgabe wird gelöst durch die Merkmale der unabhängigen Patentansprüche. Vorteilhafte Ausgestaltungen der Erfindung sind in den abhängigen Ansprüchen angegeben.

Das erfindungsgemäße Chipset nach Anspruch 1 ist für ein Endgerät wie eingangs definiert vorgesehen, beispielsweise für ein Smartphone bzw. Mobiltelefon oder ein Regelungsgerät im Industrieumfeld. Das Chipset umfassend zumindest einen Secure Processor, in den ein einmal-programmierbarer Speicher integriert ist. Im Chipset ist mindestens eine Endgerät-Seriennummer - z.B. die IMEI - des Endgeräts gespeichert. Das Verfahren ist dadurch gekennzeichnet, dass im einmal-programmierbaren Speicher Information zur Sicherung der Endgerät-Seriennummer gegen Manipulation gespeichert ist.

Die Lösung nach Anspruch 1 hat den Vorteil, dass der einmal-programmierbare Speicher einmal während der Produktion des Chipsets programmiert wird und später nicht mehr modifiziert werden kann. Hierdurch ist sichergestellt, dass die Information zur Sicherung der Endgerät-Seriennummer so bleibt wie anlässlich der Produktion programmiert und später nicht manipuliert werden kann. Folglich ist über die Sicherungs-Information die Endgerät-Seriennummer gegen Manipulation gesichert.

Daher ist gemäß Anspruch 1 ein Chipset geschaffen, bei dem die Endgerät-Seriennummer gegen Manipulation gesichert ist.

Ein erfindungsgemäßes mobilfunkfähiges Endgerät umfasst ein erfindungsgemäßes Chipset.

Gemäß einer Ausführungsform der Erfindung ist ein Zugriff auf die im einmal-programmierbaren Speicher gespeicherte Information zur Sicherung der Endgerät-Seriennummer oder/und auf die Endgerät-Seriennummer ausschließlich durch den Secure Processor möglich.

Gemäß weiteren Ausführungsformen der Erfindung umfasst das Chipset mindestens einen weiteren Prozessor, insbesondere einen Application Processor oder/und einen Baseband Processor oder/und ein oder mehrere weitere Prozessoren, wobei ein Zugriff auf die im einmal-programmierbaren Speicher gespeicherte Information zur Sicherung der Endgerät-Seriennummer oder /und auf die Endgerät-Seriennummer selbst durch den mindestens einen weiteren Prozessor nicht möglich ist.

Der Secure Processor hat im Vergleich zu anderen Processor Cores des Chipset, wie z.B. einem Baseband Processor oder einem Application Processor oder einem Interface (NFC, Bluetooth, WLAN, etc.) Processor in der Regel ein höheres Sicherheitsniveau. Daher ist es bevorzugt, den sicherheitskritischen Zugriff auf die Information zur Sicherung der Endgerät-Seriennummer oder/und auf die Endgerät-Seriennummer selbst ausschließlich dem Secure Processor zu gewähren.

Das Chipset umfasst wahlweise genauer als einen weiteren Prozessor einen Baseband Processor (BB), der für die Protokollebene einer Mobilfunkverbindung zwischen dem Chipset und einem Server außerhalb des Chipset eingerichtet ist. Bei dieser Ausführungsform der Erfindung sind der Secure Processor und der Baseband Processor dazu eingerichtet, einen Secure Channel zwischen dem Secure Processor und dem Baseband Processor einzurichten und zu betreiben, so dass über die Funkverbindung vom Server an das Chipset gesendete Nachrichten, insbesondere Nachrichten umfassend aktualisierte Endgerät-Seriennummern, vom Baseband Processor entgegenommen werden können und über den Secure Channel an den Secure Processor weitergeleitet werden können. Über den Secure Channel können weiter auch Aktualisierungsdaten für Subskriptions-Profile für integrierte Teilnehmeridentitätsmodule des Chipset oder Aktualisierungsdaten für Betriebssysteme des Chipset sicher zwischen dem Baseband Processor und dem Secure Processor übertragen werden.

Gemäß weiteren Ausführungsformen der Erfindung sind im Chipset mindestens zwei, oder mehr, Endgerät-Seriennummer des Endgeräts gleichzeitig gespeichert sind, wobei mindestens zwei, oder mehr, Endgerät-Seriennummern mindestens zwei unterschiedlichen Komponenten des Chipset zugeordnet sind. Als Komponenten können insbesondere unterschiedliche Prozessoren des Chipset vorgesehen sein. Weiter können als Komponenten unterschiedliche (integrierte) Teilnehmeridentitätsmodule oder unterschiedliche Subskriptions-Profile oder unterschiedliche Betriebssysteme des Chipset vorgesehen sein. Hierbei hat also jedes unterschiedliche (integrierte) Teilnehmeridentitätsmodul bzw. jedes unterschiedliche Subskriptions-Profil bzw. jedes unterschiedliche Betriebssystem seine eigene zugeordnete Endgerät-Seriennummer (z.B. IMEI).

Gemäß einer ersten Ausführungsvariante der Erfindung, Manipulationssicherheit sicherzustellen, umfasst die im einmal-programmierbaren Speicher gespeicherte Information die Endgerät-Seriennummer selbst, oder sie besteht genau aus der Endgerät-Seriennummer selbst. Hierbei ist die Endgerät-Seriennummer nur einmalig speicherbar, z.B. im Produktionsprozess des Chipset, und danach nicht mehr änderbar und somit auf direktem Weg gegen Manipulation gesichert.

Gemäß einer zweiten Ausführungsvariante der Erfindung, Manipulationssicherheit sicherzustellen, umfasst die im einmal-programmierbaren Speicher gespeicherte Information nicht direkt die Endgerät-Seriennummer, sondern einen Schlüssel, mit dem die Endgerät-Seriennummer gesichert ist. Die Endgerät-Seriennummer ist in einem anderen Speicher gespeichert, der kein einmal-programmierbarer Speicher zu sein braucht und gemäß einer Ausführungsform sogar gezielt ein wiederbeschreibbarer Speicher ist. Der Schlüssel, und damit die Sicherung der Endgerät-Seriennummer, wiederum ist gemäß einer von zwei Varianten gestaltet. Gemäß einer ersten Variante ist der Schlüssel ein Verschlüsselungsschlüssel zur Verschlüsselung der Endgerät-Seriennummer. Gemäß einer zweiten Variante ist der Schlüssel ein Sicherungsschlüssel, aus dem sich ein Verschlüsselungsschlüssel zur Verschlüsselung der Endgerät-Seriennummer erst ableiten lässt. In beiden Fällen ist die Endgerät-Seriennummer mit dem Verschlüsselungsschlüssel verschlüsselt. Im ersten Fall ist der Verschlüsselungsschlüssel direkt im OTP gespeichert.

Im zweiten Fall lässt sich aus dem im OTP gespeicherten Sicherungsschlüssel der Verschlüsselungsschlüssel erst ableiten. Das Chipset umfasst bei der zweiten Ausführungsvariante, bei jedweder Variante von Schlüssel, weiter eine Verschlüsselungs-Einrichtung, die eingerichtet ist, die Endgerät-Seriennummer mit dem Verschlüsselungsschlüssel zu einer verschlüsselten Endgerät-Seriennummer zu verschlüsseln und die verschlüsselte Endgerät-Seriennummer im Chipset zu speichern, in einem hierfür vorgesehenen Speicher.

Gemäß Ausführungsformen der Erfindung ist an den Secure Processor ein, gemäß manchen Ausführungsformen gezielt wiederbeschreibbarer, nichtflüchtiger Speicher angekoppelt oder ankoppelbar ist, wobei die Verschlüsselungs-Einrichtung eingerichtet ist, die verschlüsselte Endgerät-Seriennummer in den nicht-flüchtigen Speicher zu speichern.

Bei der zweiten Ausführungsvariante ist die Endgerät-Seriennummer indirekt gegen Manipulation gesichert, indem die Information zur Sicherung der Endgerät-Seriennummer nur einmalig speicherbar ist, z.B. im Produktionsprozess des Chipset, und danach nicht mehr änderbar ist. Die Endgerät-Seriennummer selbst ist bei der zweiten Ausführungsvariante in einem nicht-flüchtigen Speicher gespeichert, in mittels der Information zur Sicherung gesicherter Form, z.B. in mit dem Verschlüsselungsschlüssel verschlüsselter Form als verschlüsselte Endgerät-Seriennummer. Bei den Ausführungsformen, bei denen die gesicherte (z.B. verschlüsselte) Endgerät-Seriennummer in einem nichtflüchtigen Speicher gespeichert ist, der wiederbeschreibbar ist, ist es einer autorisierten Instanz, die Zugriff auf die Sicherungs-Information hat, möglich, die Endgerät-Seriennummer zu aktualisieren. Über die Sicherungs-Information im einmal-programmierbaren Speicher OTP ist gleichzeitig der Schutz der Endgerät-Seriennummer gegen nichtautorisierte Manipulation sichergestellt.

Der nicht-flüchtige Speicher ist gemäß einer Alternative als außerhalb des Secure Processor, und dabei innerhalb des Chipset, angeordneter externer (extern, da nicht direkt auf der Chipfläche des Secure Processor vorgesehen) Speicher des Chipset gestaltet, und ist über einen Systembus des Chipset an den Secure Processor angekoppelt oder ankoppelbar. Gemäß einer weiteren Alternative ist der nicht-flüchtige Speicher als innerhalb des Secure Processor angeordneter integrierter interner Speicher gestaltet, der auf Chiptechnologie-Ebene auf der Chipfläche des Secure Processor integriert ist.

Wahlweise enthält das Chipset ein integriertes Teilnehmeridentitätsmodul iUICC, in dem ein Subskriptions-Profil abgespeichert oder implementiert ist, oder das eingerichtet ist, ein Subskriptions-Profil abzuspeichern und zu implementieren.

Ein erfindungsgemäßes Verfahren zur Aktualisierung der Endgerät-Seriennummer in einem erfindungsgemäßen Chipset umfasst die Schritte:
b) im Chipset, Empfangen einer aktualisierten Endgerät-Seriennummer, die dazu vorgesehen ist, die im Chipset gespeicherte Endgerät-Seriennummer zu ersetzen, und Zuführen der aktualisierten Endgerät-Seriennummer zum Secure Processor;
c) im Secure Processor, in Reaktion auf das Empfangen aus Schritt b), Gewinnen des Verschlüsselungsschlüssels, durch:
   - entweder Auslesen des Verschlüsselungsschlüssels aus dem einmal-programmierbaren Speicher;
   - oder Auslesen des Sicherungsschlüssels aus dem einmal-programmierbaren Speicher und anschließendes Ableiten des Verschlüsselungsschlüssels aus dem Sicherungsschlüssel;
d) Verschlüsseln der aktualisierten Endgerät-Seriennummer mit dem Verschlüsselungsschlüssel zu einer verschlüsselten aktualisierten Endgerät-Seriennummer;
e) Speichern der verschlüsselten aktualisierten Endgerät-Seriennummer im (wiederbeschreibbaren) nicht-flüchtigen Speicher.

Das Verfahren umfasst wahlweise weiter, vor Schritt b), den Schritt a) Senden der aktualisierten Endgerät-Seriennummer von einem Server an das Chipset, und Entgegennehmen der gesendeten aktualisierten Endgerät-Seriennummer durch das Chipset.

Wahlweise wird die aktualisierte Endgerät-Seriennummer in einem isolierten Schritt oder Verfahren zum Aktualisieren der Endgerät-Seriennummer an das Chipset gesendet, der ausschließlich oder überwiegend das Aktualisieren der Endgerät-Seriennummer zum Ziel und Inhalt hat.

Wahlweise, alternativ, ist das Aktualisieren der Endgerät-Seriennummer in eine (Erst-)Übertragung oder eine Aktualisierung eines Subskriptions-Profils oder eines Betriebssystems an das Chipset integriert. Bei dieser alternativen Vorgehensweise enthält das Chipset ein integriertes Teilnehmeridentitätsmodul, in dem mindestens ein Subskriptions-Profil abgespeichert ist, oder das zum Abspeichern eines Subskriptions-Profils eingerichtet ist. Dabei erfolgt das a) Senden der aktualisierten Endgerät-Seriennummer als Bestandteil eines Übertragens eines Subskriptions-Profils oder eines Betriebssystems an das Chipset, oder als Bestandteil einer Subskriptionsaktualisierung oder Betriebssystemaktualisierung für ein bereits im Chipset vorhandenes Subskriptions-Profil. Diese Vorgehensweise hat den Vorteil, dass ein Subskriptions-Profil bzw. Betriebssystem und eine im Zusammenhang damit verwendete Endgerät-Serien-nummer automatisch konsistent gehalten werden.

Gemäß Ausführungsformen des Verfahrens umfasst das Chipset einen Baseband Processor, und das Zuführen der aktualisierten Endgerät-Seriennummer zum Secure Processor umfasst ein Senden der aktualisierten Endgerät-Seriennummer vom Baseband Processor an den Secure Processor über den Secure Channel zwischen dem Baseband Processor und dem Secure Processor. Der Secure Processor verfügt über Sicherheitsressourcen zur sicheren Handhabung von Endgerät-Seriennummern, der Baseband Processor hingegen nicht, oder zumindest nicht notwendigerweise. Der Baseband Processor stellt dem Chipset andererseits eine Schnittstelle zu einem OTA Server zur Verfügung, der eine aktualisierte Endgerät-Seriennummer für das Chipset bereithält. OTA (OTA = over the air) Server sind in Zusammenhang mit mobilfunkfähigen Endgeräten, die ein Teilnehmeridentitätsmodul haben, dazu eingerichtet, über eine Mobilfunkverbindung mit dem Teilnehmeridentitätsmodul zu kommunizieren. Der Secure Processor selbst hat keine Schnittstelle zu OTA Servern. Der Secure Channel zwischen dem Baseband Processor und dem Secure Processor ermöglicht, eine am Baseband Processor vom OTA Server empfangene aktualisierte Endgerät-Seriennummer innerhalb des Chipset gesichert zum Secure Processor weiterzuleiten. Die Absicherung der Kommunikation vom OTA Server zum Baseband Processor ist nicht Gegenstand dieser Anmeldung, und kann z.B. mit bekannten Mitteln erfolgen.

Das Verfahren umfasst wahlweise weiter den Schritt: f) Unbrauchbarmachen der gespeicherten Endgerät-Seriennummer durch Löschen der gespeicherten verschlüsselten Endgerät-Seriennummer, Überspeichern der verschlüsselten Endgerät-Seriennummer mit der aktualisierten verschlüsselten Endgerät-Seriennummer oder anderweitiges Unbrauchbarmachen.

Das Verfahren umfasst wahlweise weiter, anlässlich des Empfangens einer aktualisierten Endgerät-Seriennummer, Authentisierung oder/und Verifizierung eines Zählers. Die Authentisierung ist eine Authentisierung des Servers gegenüber dem Chipset mittels eines oder mehrerer im einmal-programmierbaren Speicher abgelegter Authentisierungsschlüssel(s). Die Verifizierung ist ein Verifizieren einer zusammen mit der aktualisierten Endgerät-Seriennummer empfangenen Zählerinformation gegenüber einer im einmal-programmierbaren Speicher gespeicherten Referenz-Zählerinformation, um zu bewirken, dass das Speichern der aktualisierten Endgerät-Seriennummer nur höchstens dann zugelassen wird, falls eine durch die Referenz-Zählerinformation festgelegte Anzahl von Aktualisierungen der Endgerät-Seriennummer noch nicht überschritten ist.

### Kurze Beschreibung der Zeichnungen

Im Folgenden wird die Erfindung an Hand von Ausführungsbeispielen und unter Bezugnahme auf die Zeichnung näher erläutert, in der zeigt:

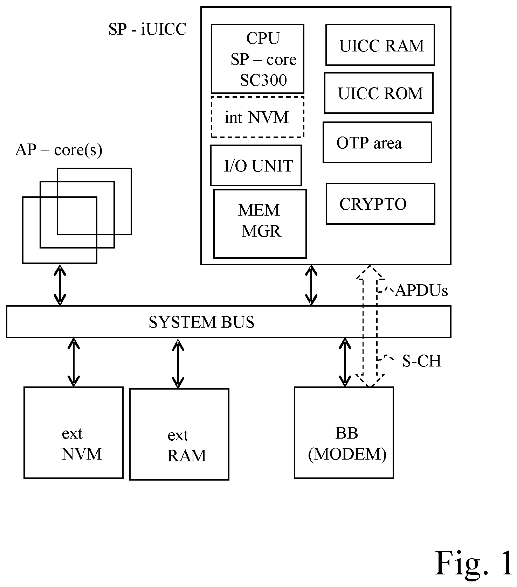

- Fig. 1: in schematischer Darstellung ein Chipset gemäß einer Ausführungsform der Erfindung.

### Detaillierte Beschreibung von Ausführungsbeispielen

Fig. 1 zeigt, in schematischer Darstellung, ein Chipset gemäß einer Ausführungsform der Erfindung. Das Chipset umfasst folgende Komponenten: einen Secure Processor SP, einen Baseband Core Processor BB (ein BB wird teils auch als Modem bezeichnet), einen Application Processor AP (mit ein oder mehreren, hier mehreren, Prozessor-Cores, d.h. Prozessorkernen oder CPUs), einen Speicherchip mit einem außerhalb des Secure Processor SP, aber innerhalb des Chipset angeordneten wiederbeschreibbaren nicht-flüchtigen Speicher NVM. Das Chipset ist in ein Chipset Package eingehäust. Der nicht-flüchtige Speicher NVM ist im Beispiel aus Fig. 1 als zwar innerhalb des Chip Package aber außerhalb des Secure Processor SP angeordneter externer Speicher ext NVM vorgesehen (also nicht intern, direkt auf dem Chip des Secure Processor SP gelegen), kann aber alternativ auch ganz außerhalb des Chip Package liegen. In einer weiteren Ausprägung, die in Fig. 1 gestrichelt dargestellt ist, ist der nicht-flüchtige Speicher NVM ein interner Speicher int NVM des Secure Processor SP, der dem Secure Processor SP fest zugeordnet ist und in den Chip des Secure Processor SP integriert ist, beispielsweise auf Ebene der integrierten Halbleiter-Fertigungstechnologie integriert. Die Komponenten sind in Fig. 1 über einen Systembus miteinander gekoppelt. Zwischen dem Secure Processor SP und dem Baseband Core Processor BB ist, physisch gesehen über den Systembus, ein Secure Channel S-CH eingerichtet, über den der Secure Processor SP und der Baseband Core Processor BB gesichert Daten austauschen können. Die Daten werden zwischen Secure Processor SP und Baseband Core Processor BB im Secure Channel S-CH auf Protokollebene als APDU Kommandos gemäß dem aktuell verbreitet verwendeten Standard ISO 7816 ausgetauscht. Alternativ werden die Daten in einem anderen Format als dem ISO 7816 APDU Format ausgetauscht. Der Secure Channel S-CH wird durch Authentisierung und Schlüsselvereinbarung eingerichtet und durch anschließenden verschlüsselten Austausch von Daten betrieben.

Der Secure Processor SP umfasst einen SP Core (d.h. eine CPU), einen einmal-programmierbaren Speicher OTP area, einen Nur-Lese-Speicher UICC ROM, einen exklusiven Arbeitsspeicher UICC RAM des Secure Processor SP, eine Kryptoeinheit CRYPTO, eine Speicherverwaltung Mem Mgr und eine Schnittstelleneinheit I/O Unit. Wie erwähnt kann auf der Chipfläche des Secure Processor SP weiter, zusätzlich zum einmal-beschreibbaren Speicher OTP, ein wiederbeschreibbarer nicht-flüchtigen Speicher NVM beinhaltet sein, wie gestrichelt angedeutet. Die Speicherverwaltung Mem Mgr, die Kryptoeinheit CRYPTO und die Schnittstelleneinheit I/O Unit sind in Zusammenwirkung miteinander eingerichtet, den Secure Channel S-CH zwischen dem Secure Processor SP und dem Baseband Core Processor BB einzurichten und zu betreiben, mittels Authentisierung und Verschlüsselung. Im Secure Processor SP ist ein integriertes Teilnehmeridentitätsmodul iUICC eingerichtet. Der Nur-Lese-Speicher UICC ROM und der Arbeitsspeicher UICC RAM sind speziell für integrierte Teilnehmeridentitätsmodule iUICC auf dem Secure Processor SP vorgesehen. Das Chipset hat weiter einen allgemeinen Arbeitsspeicher RAM, hier als externer Arbeitsspeicher ext RAM dargestellt, der außerhalb des Secure Processor SP liegt und den übrigen Prozessorkernen als Arbeitsspeicher zur Verfügung steht.

Im einmal-programmierbaren Speicher OTP area sind Schlüssel für die Authentisierung und Verschlüsselung zum Einrichten und Betreiben des Secure Channel S-CH gespeichert. Im einmal-programmierbaren Speicher OTP area ist weiter, gemäß einer ersten Alternative der Erfindung die Endgerät-Seriennummer IMEI gespeichert. Im Fall mehrerer IMEIs sind die mehreren Endgerät-Seriennummern IMEI, IMEI', IMEI", ... gespeichert. Die Endgerät-Seriennummer(n) IMEI ist (sind) entweder im Klartext oder in verschlüsselter Form als enc(IMEI) im einmal-programmierbaren Speicher OTP area gespeichert. Gemäß einer zweiten Alternative der Erfindung ist (sind) die Endgerät-Seriennummer(n) IMEI (, IMEI', IMEI", ...) im (externen oder internen) wiederbeschreibbaren nicht-flüchtigen Speicher NVM (ext NVM oder int NVM) gespeichert, vor allem im Fall von ext NVM zwingend in verschlüsselter Form als enc(IMEI), verschlüsselt mit einem Verschlüsselungsschlüssel. Der Verschlüsselungsschlüssel, oder ein Sicherungsschlüssel, aus dem sich der Verschlüsselungsschlüssel ableiten lässt, ist bei dieser zweiten Variante im einmal-programmierbaren Speicher OTP area abgespeichert.

Für das Konzept einer integrierten iUICC sowie einer eUICC ist ein Mechanismus wünschenswert, bei dem neben den Profildaten ggf. auch das komplette Betriebssystem über die Ferne ausgetauscht werden kann, da ja nicht einfach die SIM-Karte körperlich ausgetauscht werden kann. Dieser Mechanismus wird auch als eSIM Management bezeichnet. Da sich über den Lebenszyklus der Hardware (des Chipsets) die Subskriptionen, Betriebssysteme und Netzbetreiber theoretisch beliebig oft ändern können, ist die Ablage der IMEI für die jeweilige Subskription in einem wiederbeschreibbaren nicht-flüchtigen Speicher zu bevorzugen. Ebenso ist es möglich, wenn ein ausreichend großer wiederbeschreibbarer nicht-flüchtigen Speicher vorgesehen ist, dass sich mehrere Profile oder Betriebssysteme, oder mehrere iUICCs, parallel auf dem Chipset befinden. Daher ist es, zugunsten einfacherer Zuordenbarkeit zwischen IMEI und Profil/Betriebssystem, vorteilhaft die IMEI als Bestandteil des Subskriptions-Update über das Remote Management System gemeinsam mit dem Profil / Betriebssystem OS der iUICC bzw. eUICC zu verwalten. So kann im Falle des Betriebsystem- bzw. Profilwechsels oder bei Aufbringung von parallel aktiven unterschiedlichen Subskriptionen (von ggf. verschiedenen Netzwerk-Betreibern) die IMEI entweder als integraler Bestandteil der Subskription (z.B. in einem dedizierten Elementary File in der UICC Datenstruktur) oder als separater Dateninhalt, allerdings im gleichen Aktualisierungsvorgang, auf das Gerät übertragen werden. Dadurch wird gewährleistet, dass immer eine dedizierte IMEI der jeweils gültigen und ausgeführten Subskription zugeordnet ist.

### Zitierter Stand der Technik

[1] ETSI TS 122 016, Digital cellular telecommunications system (Phase 2+); Universal Mobile Telecommunications System (UMTS); LTE; International Mobile Equipment Identities (IMEI); 3GPP TS 22.016 version 10.0.0 Release 10;
[2] US 2006/0236111 A1;
[3] US 2007/0050622 A1;
[4] US 2012/0011345 A1;
[5] WO 2014/134829 A1;
[6] US 2010/0180130 A1;
[7] CN 102 083 055 A;
[8] EP 2 829 978 A1.

## Patentansprüche

1. Ein Chipset für ein Endgerät (ME), das Chipset umfassend:
- zumindest einen Secure Processor (SP), in den ein einmal-programmierbarer Speicher (OTP area) integriert ist,
- ein Modem (BB);
- einen Application Processor (AP); und
- einen Speicherchip mit einem wiederbeschreibbaren nichtflüchtigen Speicher (NVM, ext NVM, int NVM),
wobei der Secure Processor (SP) ein höheres Sicherheitsniveau als der Application Processor (AP) aufweist,
wobei über einen Systembus ein Secure Channel (S-CH) zwischen dem zumindest einen Secure Processor (SP) und dem Modem (BB) zum gesicherten Übertragen von Daten zwischen dem Secure Processor (SP) und dem Modem (BB) eingerichtet ist,
wobei im einmal-programmierbaren Speicher (OTP area) oder im Speicherchip (NVM, ext NVM, int NVM) mindestens eine Endgerät-Seriennummer (IMEI) des Endgeräts (ME) gespeichert ist,
wobei im einmal-programmierbaren Speicher (OTP area) ein Schlüssel zum Einrichten und Betreiben des Secure Channels (S-CH) abgespeichert ist und
wobei ein Zugriff auf Informationen zur Sicherung der Endgeräte-Seriennummer (IMEI) und/oder die Endgerät-Seriennummer (IMEI) ausschließlich dem Secure Processor (SP) gewährt wird;
wobei im einmal-programmierbaren Speicher (OTP area) zudem ein Verschlüsselungsschlüssel zur Verschlüsselung der Endgerät-Seriennummer (IMEI) oder ein Sicherungsschlüssel, aus dem ein Verschlüsselungsschlüssel zur Verschlüsselung der Endgerät-Seriennummer (IMEI) ableitbar ist, abgespeichert ist; und wobei das Chipset weiter eine Verschlüsselungs-Einrichtung umfasst, die eingerichtet ist, die Endgerät-Seriennummer (IMEI) mit dem Verschlüsselungsschlüssel zu einer verschlüsselten Endgerät-Seriennummer (enc(IMEI)) zu verschlüsseln und die verschlüsselte Endgerät-Seriennummer (enc(IMEI)) im wiederbeschreibbaren, nicht-flüchtigen Speicher (NVM, ext NVM, int NVM) zu speichern.

2. Das Chipset nach Anspruch 1, wobei der Secure Channel (S-CH) durch Authentisierung und Schlüsselvereinbarung eingerichtet und durch anschließenden verschlüsselten Austausch der Daten betrieben ist.

3. Das Chipset nach einem der vorhergehenden Ansprüche, wobei der zumindest eine Secure Processor (SP) weiterhin eine Speicherverwaltung (MEMMGR), eine Kryptoeinheit (CRYPTO) und eine Schnittstelleneinheit (I/O UNIT) umfasst, die zusammenwirkend eingerichtet sind, den Secure Channel (S-CH) einzurichten und zu betreiben.

4. Das Chipset nach einem der vorhergehenden Ansprüche, wobei der zumindest eine Secure Processor (SP) weiterhin einen Nur-Lese-Speicher (UICC-ROM) und einen exklusiven Arbeitsspeicher (UICC-RAM) umfasst, die für zumindest ein in dem Secure Processor (SP) eingerichtetes integriertes Teilnehmeridentitätsmodul (iUICC) vorgesehen sind,
wobei im integrierten Teilnehmeridentitätsmodul (iUICC) ein Subskriptions-Profil abgespeichert ist, oder das integrierte Teilnehmeridentitätsmodul (iUICC) eingerichtet ist, ein Subskriptions-Profil abzuspeichern.

5. Das Chipset nach einem der vorhergehenden Ansprüche, wobei das Modem ein Baseband Processor (BB) ist, der für eine Funkverbindung zwischen dem Chipset und einem Server außerhalb des Chipsets eingerichtet ist, wobei über die Funkverbindung vom Server an das Chipset gesendete Nachrichten, insbesondere Nachrichten umfassend aktualisierte Endgerät-Seriennummern (IMEI*), vom Baseband Processor (BB) entgegengenommen werden können und über den Secure Channel (S-CH) an den Secure Processor (SP) weitergeleitet werden können.

6. Das Chipset nach einem der vorhergehenden Ansprüche, wobei im Chipset mindestens zwei, oder mehr, Endgerät-Seriennummer (IMEI, IMEI', IMEI"...) des Endgeräts (ME) gleichzeitig gespeichert sind.

7. Das Chipset nach einem der Ansprüche 1 bis 6, wobei der wiederbeschreibbare nichtflüchtige Speicher (ext NVM) außerhalb des Secure Processors (SP) aber innerhalb des Chipsets angeordnet ist.

8. Das Chipset nach einem der Ansprüche 1 bis 6, wobei der wiederbeschreibbare nichtflüchtige Speicher (ext NVM) außerhalb des Chipsets angeordnet ist.

9. Das Chipset nach einem der Ansprüche 1 bis 6, wobei der wiederbeschreibbare nichtflüchtige Speicher (NVM) ein interner Speicher (int NVM) des Secure Processors (SP) ist, der dem Secure Processor (SP) fest zugeordnet ist und in den Chip des Secure Processors (SP) integriert ist.

10. Das Chipset nach einem der Ansprüche 1 bis 6, wobei der interne Speicher (int NVM) des Secure Processors (SP) auf Halbleiterebene in den Chip des Secure Processors (SP) integriert ist.

11. Das Chipset nach einem der vorhergehenden Ansprüche, wobei die Daten zwischen dem Secure Processor (SP) und dem Modem (BB) als APDU-Kommandos übertragen werden.

12. Mobilfunkfähiges Endgerät (ME) umfassend ein Chipset nach einem der vorangehenden Chipset-Ansprüche 1 bis 11.

13. Verfahren zum Betreiben eines Chipsets gemäß einem der vorhergehenden Ansprüche 1 bis 11 zum Verwalten der Endgerät-Seriennummer (IMEI) des Endgeräts (ME) gemeinsam mit dem Verwalten eines Profils oder eines Betriebssystems eines im Chipset integrierten Teilnehmeridentitätsmoduls, wobei die Endgerät-Seriennummer (IMEI) als integraler Bestandteil des Profils oder als separater Dateninhalt in einem gemeinsamen Aktualisierungsvorgang verwaltet werden.

## Claims

1. A chipset for a terminal (ME), the chipset comprising:
- at least one secure processor (SP) into which a one-time programmable memory (OTP area) is integrated,
- a modem (BB);
- an application processor (AP); and
- a memory chip with a rewritable non-volatile memory (NVM, ext NVM, int NVM), wherein the secure processor (SP) has a higher security level than the application processor (AP),
wherein a secure channel (S-CH) is set up between the at least one secure processor (SP) and the modem (BB) via a system bus for secured transmission of data between the secure processor (SP) and the modem (BB),
wherein at least one terminal serial number (IMEI) of the terminal (ME) is stored in the one-time programmable memory (OTP area) or in the memory chip (NVM, ext NVM, int NVM),
wherein a key for setting up and operating the secure channel (S-CH) is stored in the one-time programmable memory (OTP area), and
wherein access to information for securing the terminal serial number (IMEI) and/or the terminal serial number (IMEI) is exclusively granted to the secure processor (SP);
wherein an encryption key for encrypting the terminal serial number (IMEI) or a securing key, from which an encryption key for encrypting the terminal serial number (IMEI) can be derived, is also stored in the one-time programmable memory (OTP area); and wherein the chipset further comprises an encryption device which is set up to encrypt the terminal serial number (IMEI) with the encryption key to form an encrypted terminal serial number (enc(IMEI)) and to store the encrypted terminal serial number (enc(IMEI)) in the rewritable, non-volatile memory (NVM, ext NVM, int NVM).

2. The chipset according to Claim 1, wherein the secure channel (S-CH) is set up by authentication and key agreement and is operated by subsequent encrypted exchange of the data.

3. The chipset according to one of the preceding claims, wherein the at least one secure processor (SP) furthermore comprises a memory management (MEMMGR), a crypto unit (CRYPTO) and an interface unit (I/O UNIT) which are set up in a cooperating manner to set up and operate the secure channel (S-CH).

4. The chipset according to one of the preceding claims, wherein the at least one secure processor (SP) furthermore comprises a read-only memory (UICC-ROM) and an exclusive working memory (UICC-RAM) which are provided for at least one integrated subscriber identity module (iUICC) set up in the secure processor (SP), wherein a subscription profile is stored in the integrated subscriber identity module (iUICC), or the integrated subscriber identity module (iUICC) is set up to store a subscription profile.

5. The chipset according to one of the preceding claims, wherein the modem is a baseband processor (BB) which is set up for a radio connection between the chipset and a server outside the chipset, wherein messages sent from the server to the chipset via the radio connection, in particular messages comprising updated terminal serial numbers (IMEI*), can be received by the baseband processor (BB) and can be forwarded to the secure processor (SP) via the secure channel (S-CH).

6. The chipset according to one of the preceding claims, wherein at least two or more terminal serial numbers (IMEI, IMEI', IMEI"...) of the terminal (ME) are stored simultaneously in the chipset.

7. The chipset according to one of Claims 1 to 6, wherein the rewritable non-volatile memory (ext NVM) is arranged outside the secure processor (SP) but within the chipset.

8. The chipset according to one of Claims 1 to 6, wherein the rewritable non-volatile memory (ext NVM) is arranged outside the chipset.

9. The chipset according to one of Claims 1 to 6, wherein the rewritable non-volatile memory (NVM) is an internal memory (int NVM) of the secure processor (SP) which is permanently assigned to the secure processor (SP) and is integrated into the chip of the secure processor (SP).

10. The chipset according to one of Claims 1 to 6, wherein the internal memory (int NVM) of the secure processor (SP) is integrated into the chip of the secure processor (SP) at the semiconductor level.

11. The chipset according to one of the preceding claims, wherein the data are transmitted between the secure processor (SP) and the modem (BB) as APDU commands.

12. Mobile radio-enabled terminal (ME) comprising a chipset according to one of the preceding chipset Claims 1 to 11.

13. Method for operating a chipset according to one of the preceding Claims 1 to 11 for managing the terminal serial number (IMEI) of the terminal (ME) together with the management of a profile or an operating system of a subscriber identity module integrated in the chipset, wherein the terminal serial number (IMEI) is managed as an integral part of the profile or as a separate data content in a common updating process.

## Revendications

1. Jeu de puces pour un terminal (ME), le jeu de puces comprenant:
- au moins un processeur sécurisé (SP) dans lequel est intégrée une mémoire programmable une seule fois (zone OTP),
- un modem (BB) ;
- un processeur d'application (AP) ; et
- une puce de mémoire avec une mémoire non volatile réinscriptible (NVM, ext NVM, int NVM),
dans lequel le processeur sécurisé (SP) présente un niveau de sécurité plus élevé que le processeur d'application (AP),
dans lequel un canal sécurisé (S-CH) est établi entre le processeur sécurisé (SP) et le modem (BB) via un bus de système pour le transfert sécurisé de données entre le processeur sécurisé (SP) et le modem (BB),
dans lequel au moins un numéro de série de terminal (IMEI) du terminal (ME) est stocké dans la mémoire programmable une seule fois (zone OTP) ou dans la puce de mémoire (NVM, ext NVM, int NVM),
dans lequel une clé est stockée dans la mémoire programmable une seule fois (zone OTP) pour configurer et exploiter le canal sécurisé (S-CH) et
dans lequel un accès à des informations destinées à sécuriser le numéro de série de terminal (IMEI) et/ou le numéro de série de terminal (IMEI) est fourni exclusivement par le processeur sécurisé (SP) ;
dans lequel une clé de chiffrement destinée à chiffrer le numéro de série de terminal (IMEI) est de plus stockée dans la mémoire programmable une seule fois (zone OTP), ou une clé de sécurité à partir de laquelle est déduite une clé de chiffrement afin de chiffrer le numéro de série de terminal (IMEI) ;
et dans lequel le jeu de puces comprend en outre un dispositif de chiffrement qui est configuré pour chiffrer le numéro de série de terminal (IMEI) avec la clé de chiffrement afin d'obtenir un numéro de série de terminal chiffré (enc(IMEI)) et de stocker le numéro de série de terminal chiffré (enc(IMEI)) dans la mémoire non volatile réinscriptible (NVM, ext NVM, int NVM).

2. Jeu de puces selon la revendication 1, dans lequel le canal sécurisé (S-CH) est établi par authentification et agrément de clé et est ensuite exploité par échange crypté de données.

3. Jeu de puces selon l'une des revendications précédentes, dans lequel le au moins un processeur sécurisé (SP) comprend en outre un gestionnaire de mémoire (MEMMGR), une unité cryptographique (CRYPTO) et une unité d'interface (I/O UNIT) qui sont configurés de manière interactive pour configurer et exploiter le canal sécurisé (S-CH).

4. Jeu de puces selon l'une des revendications précédentes, dans lequel le au moins un processeur sécurisé (SP) comprend en outre une mémoire morte (UICC-ROM) et une mémoire de travail exclusive (UICC-RAM) qui sont destinées à au moins un module d'identité de l'abonné intégré (iUICC) configuré dans le processeur sécurisé (SP),
dans lequel un profil d'abonnement est stocké dans le module d'identité de l'abonné intégré (iUICC), ou le module d'identité de l'abonné intégré (iUICC) est configuré pour stocker un profil d'abonnement.

5. Jeu de puces selon l'une des revendications précédentes, dans lequel le modem est un processeur de bande de base (BB) qui est configuré pour une liaison radio entre le jeu de puces et un serveur à l'extérieur du jeu de puces, dans lequel des messages envoyés du serveur au jeu de puces via la liaison radio, en particulier des messages incluant des numéros de série de terminal actualisés (IMEI*), peuvent être acceptés par le processeur de bande de base (BB) et peuvent être transférés au processeur sécurisé (SP) via le canal sécurisé (S-CH).

6. Jeu de puces selon l'une des revendications précédentes, dans lequel au moins deux ou plus de deux numéros de série de terminal (IMEI, IMEI', IMEI"...) du terminal (ME) sont stockés simultanément dans le jeu de puces.

7. Jeu de puces selon l'une des revendications 1 à 6, dans lequel la mémoire non volatile réinscriptible (ext NVM) est disposée à l'extérieur du processeur sécurisé (SP) mais à l'intérieur du jeu de puces.

8. Jeu de puces selon l'une des revendications 1 à 6, dans lequel la mémoire non volatile réinscriptible (ext NVM) est disposée à l'extérieur du jeu de puces.

9. Jeu de puces selon l'une des revendications 1 à 6, dans lequel la mémoire non volatile réinscriptible (NVM) est une mémoire interne (int NVM) du processeur sécurisé (SP) qui est fixement couplée au processeur sécurisé (SP) et est intégrée dans la puce du processeur sécurisé (SP).

10. Jeu de puces selon l'une des revendications 1 à 6, dans lequel la mémoire interne (int NVM) du processeur sécurisé (SP) est intégrée au niveau des semi-conducteurs dans la puce du processeur sécurisé (SP).

11. Jeu de puces selon l'une des revendications précédentes, dans lequel les données entre le processeur sécurisé (SP) et le modem (BB) sont transmises sous forme de commandes APDU.

12. Terminal capable d'établir des communications mobiles (ME), comprenant un jeu de puces selon l'une des revendications de jeu de puces 1 à 11 précédentes.

13. Procédé pour faire fonctionner un jeu de puces selon l'une des revendications 1 à 11 précédentes afin de gérer le numéro de série de terminal (IMEI) du terminal (ME) et de gérer conjointement un profil ou un système d'exploitation d'un module d'identité de l'abonné intégré dans le jeu de puces, dans lequel les numéros de série de terminal (IMEI) sont gérés en tant que partie intégrante du profil ou en tant que contenu de données séparé dans une opération de mise à jour commune.
